# EUROPEAN PATENT APPLICATION

(11) **EP 4 006 662 A1**
(43) Date of publication of application: **01.06.2022**
(21) Application number: 19943717.9
(22) Date of filing: 27.08.2019
(51) Int. Cl.: G05B 19/05

(54) **SYSTEM AND METHOD SUPPORTING GRAPHICAL PROGRAMMING BASED ON NEURON BLOCKS, AND STORAGE MEDIUM**

(71) Applicant: Siemens Aktiengesellschaft, 80333 München (DE)
(72) Inventor: TANG, Lisan, Shanghai 201315 (CN); HU, Feihuang, Shanghai 200010 (CN); TANG, Bingchao, Shanghai 201206 (CN)
(74) Representative: Isarpatent
(86) International application number: PCT/CN2019/102903
(87) International publication number: WO 2021/035552

(57) **Abstract**

A system and method supporting graphical programming based on neuron blocks, and a storage medium. The coding system comprises: a neuron block code library (10) storing a program code of each neuron block and a corresponding description file; a programming element library (20) storing a program code of each programming element and a corresponding description file; a graphical management module (30) for extracting the description files from the neuron block code library and/or the programming element library and generating corresponding graphics, wherein the graphics conform to an industrial standard; a graphical modeling interface (40) for presenting the graphics generated by the graphical management module and receiving an artificial intelligence (AI) graphical model established by a user on the basis of the graphics; and a code converter (50) for converting the AI graphical model into a corresponding coding program. The system can enable a user who is accustomed to industrial coding such as a PLC to realize the coding of an AI application without barriers.

## Description

### TECHNICAL FIELD

The present invention relates to the industrial field, and in particular to a system and a method supporting graphical programming based on neuron blocks, and a storage medium.

### BACKGROUND OF THE INVENTION

The technology of artificial intelligence (AI) has been applied and developed in the fields of face detection and natural language processing, etc. At present, users of automation systems (for example, engineers) are also trying to apply AI to the industrial field to improve the performance and capabilities of automation systems. However, users of automation systems are mostly good at developing programmable logic controllers (PLCs) in compliance with the IEC61131 standard, but not programming in languages such as Python or C++ (CPP) commonly used in the AI field. As a result, they face many new challenges and difficulties when learning other programming languages, AI frameworks and libraries, and using a different integrated development environment (IDE) to develop AI applications.

At present, there are several types of AI development environment software, such as Microsoft Machine Learning Stud, Knime's Knime Analytics Platform, Ghent University's Dianne, and RapidMiner's RapidMiner Studio. However, none of these solutions follow or are expanded to a standard. Therefore, users of automation systems still need to learn and use a new development environment.

### BRIEF SUMMARY OF THE INVENTION

In view of this, in one aspect of the embodiments of the present invention, a system supporting graphical programming based on neuron blocks is proposed, and in another aspect, a method and a computer-readable storage medium supporting graphical programming based on neuron blocks are proposed, so as to enable users in the industrial field who are accustomed to coding, for example for PLCs, to code AI applications without difficulty.

In the embodiments of the present invention, a system supporting graphical programming based on neuron blocks is provided, comprising: a neuron block code library, which stores program code and a corresponding description file of each neuron block corresponding to each functional element in AI; a programming element library, which stores program code and a corresponding description file of each programming element used to implement various decision logics and control logics; a graphical management module, used to extract the description file of each neuron block from the neuron block code library, generate a corresponding neuron block graphic according to the description file of each neuron block, extract the description file of each programming element from the programming element library, and generate a corresponding programming element graphic according to the description file of each programming element, wherein both the neuron block graphics and the programming element graphics conform to a set industrial standard; a graphical modeling interface, used to present the neuron block graphics and the programming element graphics generated by the graphical management module, and receive a graphical AI model established by appropriate neuron block graphics and/or programming element graphics selected by a user based on the industrial standard; and a code converter, used to extract the corresponding program code from the neuron block code library and/or the programming element library according to the neuron block graphics and/or programming element graphics selected in the graphical AI model, and generate a complete coded program according to a connection and interface data between adjacent graphics in the selected neuron block graphics and/or programming element graphics.

In one implementation, the industrial standard is IEC61131-3.

In one implementation, the program code of each neuron block comprises: for each neuron block, a plurality of program code segments corresponding to different programming languages and different AI frameworks; the program code of each programming element comprises: for each programming element, a plurality of program code segments corresponding to different programming languages and different AI frameworks; the code converter extracts the corresponding program code from the neuron block code library and the programming element library based on the neuron block graphics and/or programming element graphics selected in the graphical AI model and a target programming language and a target AI framework corresponding to a user-configured target system obtained.

In one implementation, the different programming languages and different AI frameworks include: the TensorFlow framework and the PyTorch framework in Python, and the Caffe framework in C++.

In one implementation, the neuron blocks comprise one or more of: a two-dimensional convolution function block, a two-dimensional max pooling block, a two-dimension to one-dimension flattening block, and a many-to-few integration and conversion block.

In one implementation, the programming elements include one or more of: a programming element for performing the IF logic, a programming element for performing the loop control logic, a programming element for performing the AND-OR control logic, and a programming element for performing the ENABLE and DISABLE control logic.

In one implementation, the data types used in the program code of each neuron block include: basic data types conforming to the industrial standard; and additional data types of a corresponding AI framework, including TUPLE, TENSOR and NONE.

In one implementation, the code converter is further used to receive a coded program of an AI model input by the user, parse the coded program line by line, obtain a keyword that can represent a neuron block or programming element, determine a corresponding neuron block or programming element according to the keyword, determine the connection between the corresponding neuron block graphic or programming element graphic and its interface data and an adjacent graphic according to the connection and interface data between adjacent neuron blocks and/or programming elements, generate a corresponding graphical AI model, and provide the graphical AI model to a graphical modeling interface for display.

In the embodiments of the present invention, a method supporting graphical programming based on neuron blocks is provided, comprising: storing in advance program code and a corresponding description file of each neuron block corresponding to each functional element in AI in a neuron block code library, and storing program code and a corresponding description file of each programming element used to implement various decision logics and control logics in a programming element library; when the system is started, extracting the description file of each neuron block from the neuron block code library, generating a corresponding neuron block graphic according to the description file of each neuron block, extracting the description file of each programming element from the programming element library, and generating a corresponding programming element graphic according to the description file of each programming element, wherein both the neuron block graphics and the programming element graphics conform to a set industrial standard; presenting the neuron block graphics and the programming element graphics in a graphical modeling interface, and receiving a graphical AI model established by appropriate neuron block graphics and/or programming element graphics selected by a user based on the industrial standard; extracting the corresponding program code from the neuron block code library and/or the programming element library according to the neuron block graphics and/or programming element graphics selected in the graphical AI model, and generating a complete coded program according to a connection and interface data between adjacent graphics in the selected neuron block graphics and/or programming element graphics.

In one implementation, the program code of each neuron block comprises: for each neuron block, a plurality of program code segments corresponding to different programming languages and different AI frameworks; the program code of each programming element comprises: for each programming element, a plurality of program code segments corresponding to different programming languages and different AI frameworks; extracting the corresponding program code from the neuron block code library and/or the programming element library according to the neuron block graphics and/or programming element graphics selected in the graphical AI model is: extracting the corresponding program code from the neuron block code library and the programming element library based on the neuron block graphics and/or programming element graphics selected in the graphical AI model and a target programming language and a target AI framework corresponding to a user-configured target system obtained.

In one implementation, the programming elements include one or more of: a programming element for performing the IF logic, a programming element for performing the loop control logic, a programming element for performing the AND-OR control logic, and a programming element for performing the ENABLE and DISABLE control logic.

In one implementation, the data types used in the program code of each neuron block include: basic data types conforming to the industrial standard; and additional data types of a corresponding AI framework, including TUPLE, TENSOR and NONE.

In one implementation, the method further comprises: receiving a coded program of an AI model input by the user; parsing the coded program line by line; obtaining a keyword that can represent a neuron block or programming element; determining a corresponding neuron block or programming element according to the keyword; determining the connection between the corresponding neuron block graphic or programming element graphic and its interface data and an adjacent graphic according to the connection and interface data between adjacent neuron blocks and/or programming elements, and generating a corresponding graphical AI model; and displaying the graphical AI model through the graphical modeling interface.

In the embodiments of the present invention, another system supporting graphical programming based on neuron blocks is provided, comprising: at least one memory, at least one processor, at least one database, and at least one display, wherein the at least one memory is used to store a computer program; the at least one database is used to provide a neuron block code library and a programming element library; the neuron block code library is used to store program code and a corresponding description file of each neuron block corresponding to each functional element in AI; the programming element library is used to store program code and a corresponding description file of each programming element used to implement various decision logics and control logics; the display is used to provide a graphical modeling interface; the at least one processor is used to call the computer program stored in the at least one memory and execute the method supporting graphical programming based on neuron blocks described in any of the above implementations.

A computer-readable storage medium proposed in the embodiments of the present invention has a computer program stored thereon; the computer program can be executed by a processor and implement the method supporting graphical programming based on neuron blocks described in any of the above implementations.

It can be seen from the above solution that, since in the embodiments of the present invention a neuron block is configured for each functional element in AI and each neuron block is implemented in three forms, i.e., program code, a description file and a graphical representation, in such a way that the graphical representation in particular conforms to a set industrial standard, for example, IEC61131-3, users are provided with a single programming mode for PLC development software in compliance with the IEC61131-3 standard, thereby enabling users in the industrial field who are accustomed to PLC, etc. to establish AI application models without difficulty, and then the system converts the code based on the model established to generate a coded program conforming to the operation environment of the target system, thus completing AI programming without any barrier.

In addition, by establishing program code in different programming languages and different AI frameworks for each neuron block, the final coded program can be converted to one that meets the requirements of the programming language and AI framework of the target system, thereby improving flexibility and versatility of programming.

Further, by converting an existing coded program of the user into a corresponding graphical module, compatibility with existing coded programs of the user can be realized.

### BRIEF DESCRIPTION OF THE DRAWINGS

The preferred embodiments of the present invention will be described in detail below with reference to the drawings, so that those skilled in the art will better understand the above and other features and advantages of the present invention. In the drawings:
Figure 1 is an exemplary structural diagram of a system supporting graphical programming based on neuron blocks in the embodiments of the present invention.
Figure 2 is an example of a typical neuron block graphic in one example of the present invention.
Figure 3 is an example of the neuron block graphic of the two-dimensional convolution function in the embodiments of the present invention.
Figure 4 is an example of a simplification of Figure 3 in one example of the present invention.
Figure 5A is an example of the neuron block graphic of the max pooling block in one example of the present invention.
Figure 5B is an example of a simplification of Figure 5A in one example of the present invention.
Figure 6A is the AI model established by a user in one example of the present invention.
Figure 6B is an example of a simplification of Figure 6A in one example.
Figure 7 is AlexNet, a very well-known convolutional neural network (CNN) model established by a user in one example of the present invention.
Figure 8 is an exemplary flowchart of the method supporting graphical programming based on neuron blocks in the embodiments of the present invention.
Figure 9 is an exemplary structural diagram of another system supporting graphical programming based on neuron blocks in the embodiments of the present invention.

In the drawings, the following reference numerals are used:

| Numeral | Meaning |
|---|---|
| 10 | Neuron block code library |
| 20 | Programming element library |
| 30 | Graphical management module |
| 40 | Graphical modeling interface |
| 50 | Code converter |
| S82, S84, S86, and S88 | Steps |
| 91 | Memory |
| 92 | Processor |
| 93 | Database |
| 94 | Display |
| 95 | Bus |

### DETAILED DESCRIPTION OF THE EMBODIMENTS

In order to be concise and intuitive in the description, the solution of the present invention is described below with reference to several representative embodiments. The large number of details in the embodiments is only used to help to understand the solution of the present invention. However, it is obvious that the technical solution of the present invention may not be limited to these details. In order to avoid unnecessarily obscuring the solution of the present invention, some embodiments are not described in detail, but only a framework is given. Hereinafter, "including" means "including but not limited to", and "according to..." means "at least according to..., but not limited to...". Due to Chinese language habits, when the quantity of an element is not specified hereinafter, it means that there may be one or several of the element, or it can be understood as there is at least one of it.

In the embodiments of the present invention, in order to enable users such as those of automation systems who are accustomed to coding in the industrial field, for example for PLCs, to implement coding for AI applications without difficulty, it is considered to provide a coding system for industrial development software similar to PLCs that complies with a set industrial standard, for example, the IEC61131-3 standard.

One neuron block may be provided for each functional element in the corresponding AI. For example, the neuron blocks may comprise: a two-dimensional convolution function block, a two-dimensional max pooling block, a two-dimension to one-dimension flattening block, a many-to-few full connection block, etc. In addition, for each neuron block, three objects can be implemented, i.e., program code, a description file, and a graphical representation, and the neuron blocks may be high-level abstraction in compliance with the functional block specification in IEC61131-3, i.e., they can be defined as extensions of the functional blocks in IEC61131-3 to maintain the same programming mode as PLCs. They may be constructed in a separate development environment, or integrated into a PLC development environment. They may be implemented based on actual conditions, which is not limited here. It would be sufficient as long as users of automation systems can construct AI models without learning other programming languages and the need to be familiar with other integrated development environments (IDEs). Then, the system can convert the AI model built by the user based on graphically represented neural blocks into executable target program code.

The present invention is further described in detail with reference to the drawings and the embodiments, so that its technical solution and advantages become clearer. It should be understood that the specific embodiments described here are only used to illustratively explain the present invention, and are not used to limit the scope of the present invention.

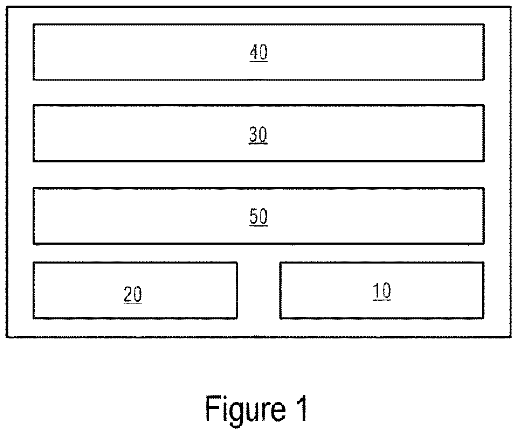

Figure 1 is an exemplary structural diagram of a system supporting graphical programming based on neuron blocks in the embodiments of the present invention. As shown in Figure 1, the system may comprise: a neuron block code library 10, a programming element library 20, a graphical management module 30, a graphical modeling interface 40, and a code converter 50.

Among them, the neuron block code library 10 is used to store and manage the program code and the corresponding description file of each neuron block corresponding to each functional element in the AI.

In a specific implementation, considering that there may be different AI frameworks in different programming languages in practical applications, for example, the TensorFlow framework and the PyTorch framework in Python, the Caffe framework in C++, etc., in the embodiments of the present invention, each neuron block is implemented in program code under each AI framework in each programming language respectively, so that the system supporting graphical programming based on neuron blocks can be more versatile and flexible. That is, corresponding to the TensorFlow framework and the PyTorch framework in Python and the Caffe framework in C++ as mentioned above, three types of program code can be implemented for each neuron block, namely, for each neuron block module, program code under the TensorFlow framework in Python, program code under the PyTorch framework in Python, and program code under the Caffe framework in C++. Of course, in other embodiments, each neuron block may be implemented under only one AI framework in one programming language. Or, only the AI frameworks in several mainstream programming languages may be used for the implementation. The specifics may be determined based on actual conditions, which are not limited here.

In a specific implementation, the data types involved in each neuron block may include: basic data types conforming to the industrial standard; and additional data types of a corresponding AI framework, including TUPLE, TENSOR and NONE. For example, Table 1 below shows each data type involved in each neuron block in the embodiments of the present invention.

**Table 1**

| No. | Keyword | Data type | Bitwise length | Note |
|---|---|---|---|---|
| 1 | BOOL | Boolean | 1 | a |
| 2 | SINT | Short integer | 8 | a |
| 3 | INT | Integer | 16 | a |
| 4 | DINT | Double integer | 32 | a |
| 5 | LINT | Long integer | 64 | a |
| 6 | USINT | Unsigned short integer | 8 | a |
| 7 | UINT | Unsigned integer | 16 | a |
| 8 | UDINT | Unsigned double integer | 32 | a |
| 9 | ULINT | Unsigned long integer | 64 | a |
| 10 | REAL | Real numbers | 32 | a |
| 11 | LREAL | Long reals | 64 | a |
| 12 | TIME | Duration | -- | a |
| 13 | DATE | Date | -- | a |
| 14 | TIME_OF_DAY | Time of day | -- | a |
| 15 | DATE_AND_TIME | Date and time of day | -- | a |
| 16 | STRING | Variable-length single-byte character string | 8 | a |
| 17 | BYTE | Bit string of length 8 | 8 | a |
| 18 | WORD | Bit string of length 16 | 16 | a |
| 19 | DWORD | Bit string of length 32 | 32 | a |
| 20 | LWORD | Bit string of length 64 | 64 | a |
| 21 | WSTRING | Variable-length double-byte character string | 16 | a |
| 22 | TUPLE | Collection of objects | -- | b |
| 23 | TENSOR | Generalization of vectors and matrices | -- | b |
| 24 | None | Empty element | -- | b |

In the table, "a" in the "Note" column represents the basic data types compatible with the IEC61131-3 standard, and "b" in the "Note" column represents additional data types corresponding to the AI framework.

The following is a brief description of the three additional data types in Table 1 above:
1) TUPLE
   A tuple is a collection of objects. In the embodiments of the present invention, the objects are other data types defined in Table 1. The format of a tuple can be defined as (object [, object]).
2) TENSOR
   Tensor is a keyword defined in the field of artificial intelligence, which represents the generalization of vectors and matrices. Actually, it is a special multidimensional array.
3) None
   This means the concept of emptiness. For Python-type interfaces, None is used directly as input, but for C++-type interfaces, None will be mapped to a special value based on the data type of the input parameter.

The syntax definition format of the description file of each neuron block may take the Backus-Naur Form (BNF), which is used more commonly in the definition of programming languages including the IEC61131-3 specification.

For example, the key fields in the syntax specification of the description file of a neuron block may be described as follows:
1) The neuron block is identified by the keyword "NEURAL_BLOCK", and the end of a neuron block is indicated by the keyword "'END_NEURAL_BLOCK'". Each neuron block has its own name, which may be an identifier. The same name is used for its program code, description file, and graphical representation, and therefore it can be searched by the name as a keyword. For example, the above two-dimensional convolution function block may be named as Conv2d, the two-dimensional max pooling block may be named as Maxpooling2d, the two-dimension to one-dimension flattening block may be named as Flatten, and the many-to-few full connection block may be named as Dense.
2) A neuron block comprises three types of variables: the input type, output type, and input-output type.
   A. VAR_INPUT: used to identify all input type variables displayed on the left side of the neuron block graphic. The declaration statement of an input type variable may comprise several fields: the variable name, the variable type, whether it is visible to the user, whether it is required, the default value, etc. The supported variable types may include all the variable types listed in Table 1.
   B. VAR_OUTPUT: used to identify all output type variables displayed on the right side of the neuron block graphic. The declaration statement of an output type variable comprises several fields: the output variable name, the data type of the output variable, whether it is visible to the user, etc. In addition, RETAIN and NON_RETAINb are used to identify whether data is retained upon power interruption.
   C. VAR_IN_OUT: used to identify input and output type variables, which are displayed on both the left and the right sides of the neuron block graphic. The declaration statement of an input and output type variable comprises several fields: the name of the input and output variable, the data type of the input and output variable, whether it is visible to the user, whether it is required, the default value, etc. The name of an input and output variable is an identifier, which consists of characters, numbers and underscores with the first character required to be a letter or an underscore. The 26 letters in both the upper and the lower cases and the 10 numerals from 0 to 9 are supported.
3) The keyword VISIBLE defines whether the variable modified by this keyword is displayed in the collapsed mode to simplify the visual part of the neuron block graphic.
4) The keyword REQUIRED defines whether the user is required to give the input value of the variable. For a variable not modified with this keyword, if the user does not provide an input, the built-in default value will be used as the input value.

For example, the description file of a two-dimensional convolution function used under the TensorFlow AI framework in Python may comprise: the neuron block name of conv2d expressed by NEURAL_BLOCK conv2d; the start of an input type variable identified by VAR_INPUT, wherein the input variables include: input enable, input date, number of convolution kernels, size of convolution kernels, strides, padding method, input data format, dilation ratio, activation function, use bias, kernel initialization method, bias initialization method, kernel regulatizer, bias regulatizer, activity regulatizer, kernel constraint, and bias constraint; and the start of an output type variable identified by VAR_OUTPUT, wherein the output variables include: execution complete, execution status, and output data.

The programming element library 20 is used to store the program code and the corresponding description file of each programming element used to implement various decision logics and control logics. In a specific implementation, the programming elements may include without limitation:
1) Programming elements used for conditionals, for example: IF...THEN...ELSIF...ELSIF...END_IF.
2) Programming elements used for loops, for example: WHILE...DO...END_WHILE.
3) Programming elements used for the AND-OR control logic, for example: NOT, AND, OR.
4) Programming elements used for the ENABLE and DISABLE control logic, for example, normally open contact, normally closed contact, and coils.

In a specific implementation, the programming rules of program code and description files of the programming elements may be consistent with the programming rules of neuron blocks. For example, the program code for each programming element may also comprise a plurality of program code segments corresponding to different programming languages and different AI frameworks. For another example, the names of the program code, description file and graphical representation of each programming element are also the same. The programming element library 20 may be one that conforms to industrial standards such as the IEC61131-3 standard.

The graphical management module 30 is used to extract the description file of each neuron block from the neuron block code library 10, generate the corresponding neuron block graphic according to the description file of each neuron block, extract the description file of each programming element from the programming element library 20, and generate the corresponding programming element graphic according to the description file of each programming element. Specifically, the neuron block graphics and the programming element graphics both conform to an industrial standard, for example, the IEC61131-3 standard. Specifically, the description file extracted from the neuron block code library 10 or the programming element library 20 can be loaded into a memory, and then the description file loaded into the memory can be parsed to generate the corresponding graphical representation component.

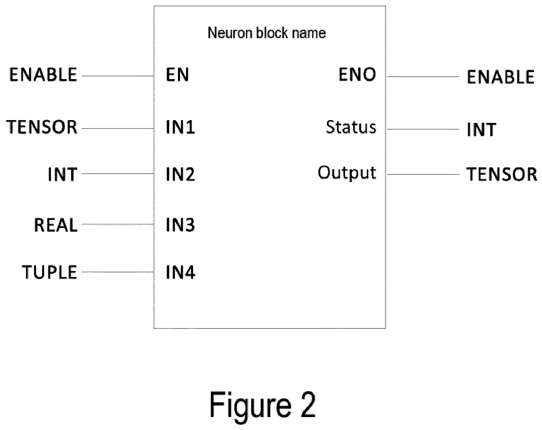

For example, Figure 2 is an example of a typical neuron block graphic in one example. As shown in Figure 2, it has five input variables and three output variables. It can be seen that the functional block specification defined by the IEC61131-3 standard is taken as reference for the layout of the graphical representation of the neuron block. Among them, EN represents input enable, and ENO represents output enable. IN1 is a tensor input, IN2 is an integer input, IN3 is a real number input, IN4 is a tuple input, Status is an integer output, and Output is a tensor output.

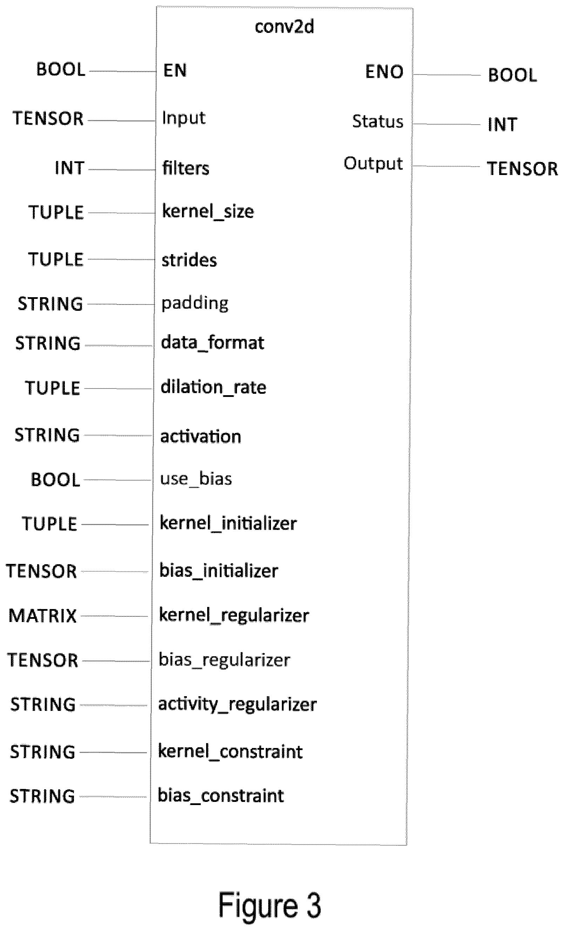

Figure 3 is an example of the graphical representation of the neuron blocks of a two-dimensional convolution function in one example. As shown in Figure 3, it has 17 inputs and 3 outputs. Among them, EN represents the Boolean input enable, ENO represents the Boolean output enable, Input represents a tensor input, filters (number of the convolution kernels) represents the output dimension of the data, kernel_size (size of the kernel) is expressed by an integer or a list/tuple consisting of individual integers and represents the length of the space domain or time domain window of the kernel, strides (step size) is expressed by an integer or a list/tuple consisting of individual integers and represents the step size of the convolution, padding (padding method) represents the strategy of padding with 0 or 1, data_format (format of data) represents the input format of data, dilation_rate (dilation ratio) represents the dilation ratio of a tuple input, activation (activation function) represents processing with the designated activation function, use_bias (use bias) represents whether to use bias, kernel_initializer (kernel initialization method) is expressed as a string representing the predefined name of the initialization method, or the initializer used for kernel initialization, bias_initializer (bias initialization method) is expressed as a string representing the predefined name of the initialization method, or the initializer used for bias initialization, kernel_regulatizer (regulatizer applied on the kernel) represents a designated regulatizer applied on the kernel, bias_regulatizer (regulatizer applied on the bias vector) represents the regulatizer applied on the bias vector, activity_regulatizer (regulatizer applied on the output) represents the regulatizer applied on the output, kernel_constraint (constraint applied on the kernel) represents the constraint applied on the kernel, and bias_constraint (constraint applied on the bias) represents the constraint applied on the bias. Status is the execution status, and Output is a tensor output.

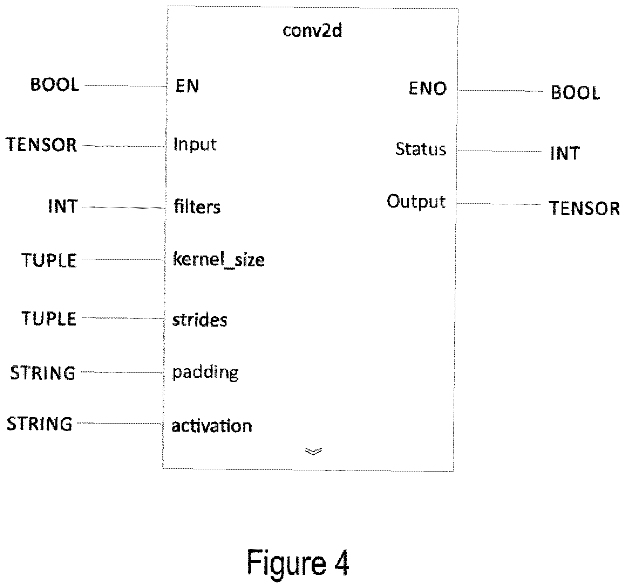

In addition, since the graphical representation of a neuron block sometimes has a large amount of input and output data, for example, a lot of input data as shown in Figure 3, in order to save space and facilitate the global display of the entire AI model, the graphical representation of a neuron block with a large amount of input and output data may be simplified for display. For example, for the example shown in Figure 3, input data that is not frequently shown can be hidden in the display. For example, Figure 4 is an example of a simplification of Figure 3 in one example. As shown in Figure 4, the user may click on the symbol at the bottom to hide or show some data. For example, part of the data may be hidden by clicking on the symbol " 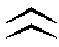 " at the bottom, and the hidden data may be shown by clicking on the symbol " 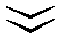 " at the bottom.

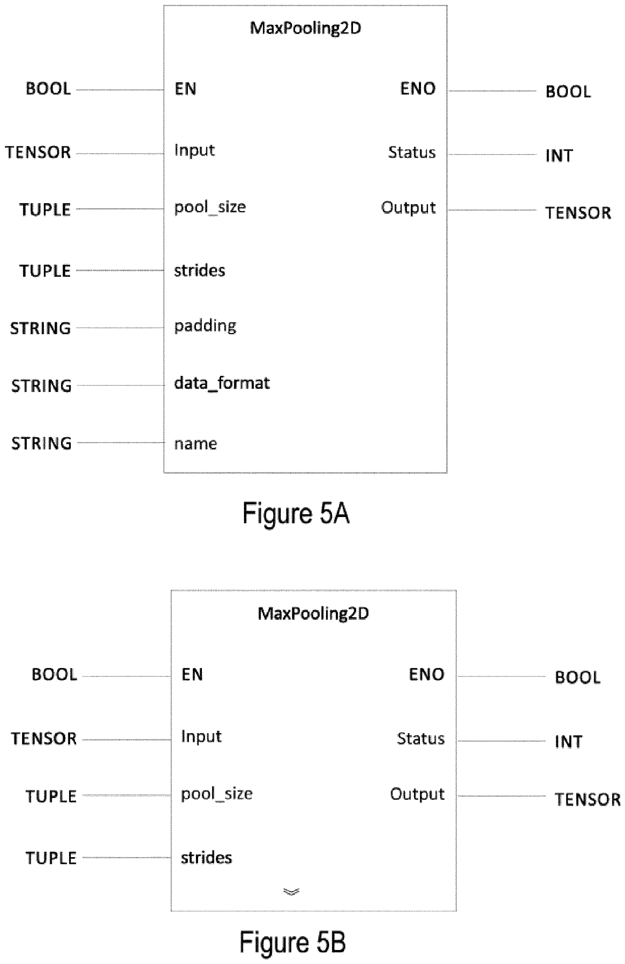

Figure 5A is an example of the neuron block graphic of the max pooling block in one example. As shown in Figure 5, it has 7 inputs and 3 outputs. Among them, EN represents the Boolean input enable, ENO represents the Boolean output enable, Input represents a tensor output, pool_size (pooling factor) represents the pooling factor in two directions (vertical and horizontal), strides (step size) represent the step size for pooling, padding (padding method) represents the padding method for data input, data_format (format of data) represents the position of the channel dimension of the image, and name represents the name of the two-dimensional max pooling layer. Status is the execution status, and Output is a tensor output. Figure 5B is an example of a simplification of Figure 5A in one example of the present invention.

The graphical modeling interface 40 is used to present the neuron block graphics and the programming element graphics generated by the graphical management module 30, and receive the AI graphical model established by the appropriate neuron block graphics and/or programming element graphics selected by the user based on an industrial standard.

In a specific implementation, neuron block graphics and programming element graphics may be displayed in various ways in the graphical modeling interface 40. For example, they may be presented as small icons + large graphics in a similar industrial standard, for example, IEC61131-3. That is, firstly, the icons corresponding to each neuron block graphic and programming element graphic are presented through a menu window. When the user clicks on an icon to build a graphical AI model, the large graphic corresponding to the icon can be displayed in the modeling window according to the user's mouse position, and then the user can instantiate and initialize the large graphic by dragging, connecting, input and output, etc. For example, in one example, the input and output variable of the neuron block conv2d of a two-dimensional convolution function comes from the first convolution layer of the VGG16 model of a CNN model, and its description file after user instantiation and initialization may comprise: using NEURAL_BLOCK conv2d to represent the name of the neuron block conv2d; using VAR_INPUT to identify the start of an input type variable, wherein input variables include: input enable of the Boolean type, size of the input image: 224 pixels respectively for the length and the width in the RGB3 channel, 64 kernels sized 3x3, stride of 1 in both X and Y directions, convolution results at the boundaries to be retained, TensorFlow format, i.e., (224, 224, 3) for input data, 1 as the dilation ratio, no use of activation, use of bias, use of 'GLOROT_UNIFORM' for kernel initialization, use of 'ZERO' for bias initialization, no regulatizer on kernel, no regulatizer on bias, no regulatizer on output, no constraint on kernel, and no constraint on bias; and using VAR_OUTPUT to identify the start of an output type variable, wherein output variables include: execution complete for neuron block module, execution status, and output tensor.

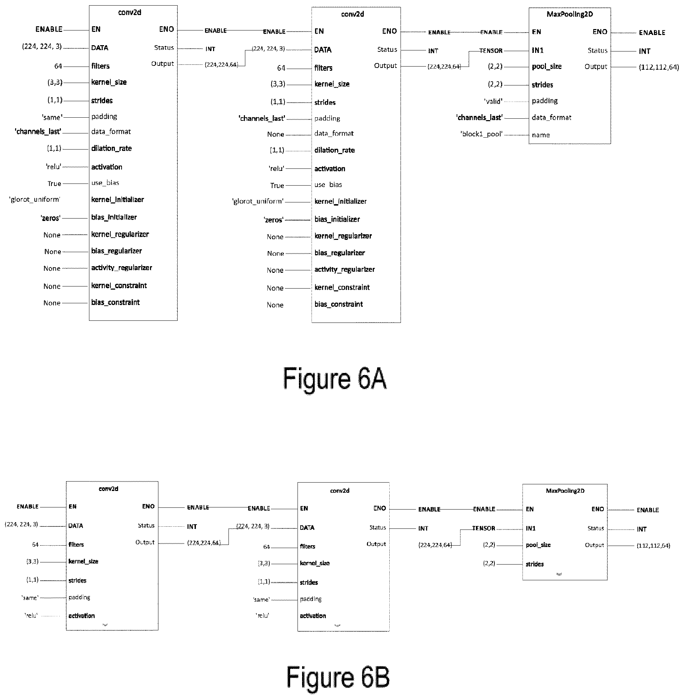

A complete graphical AI model may comprise a plurality of neuron blocks and/or programming elements. Figure 6A is an AI model in one example, established by a user and comprising two conv2d neuron blocks and one maxpooling2d neuron block. Figure 6B is an example of a simplification of Figure 6A in one example.

Corresponding to the AI model shown in Figure 6A and Figure 6B, the corresponding instantiated description file may comprise: for the first conv2D neuron block, use of 64 convolution kernels sized 3x3, use of relu activation function, the convolution results at the boundaries to be retained, and the name of the two-dimensional convolution neuron block set to block1_conv1; for the second conv2D neuron block, use of 64 convolution kernels sized 3x3, use of relu activation function, the convolution results at the boundaries to be retained, and the name of the two-dimensional convolution neuron block set to block1_conv2; for the MaxPooling2d neuron block, the pooling factor set to 2x2, the stride set to 2x2, and the name of the two-dimensional max pooling neuron block set to block1_pool.

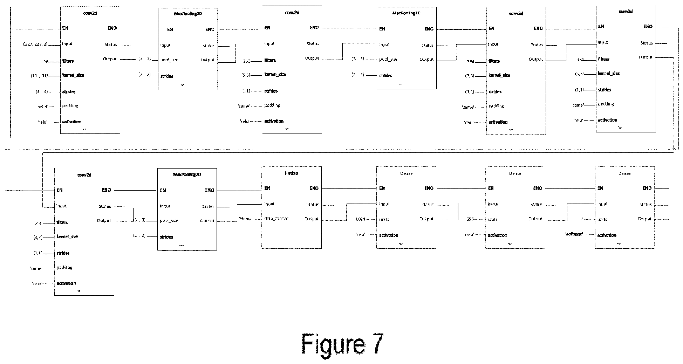

Figure 7 is AlexNet, a very well-known CNN model established by a user in one example. It consists of 5 Conv2d neuron blocks, 3 Maxpooling2d neuron blocks, one Flatten neuron block and 3 Dense neuron blocks. It can be seen that its modeling environment is very similar to the PLC modeling environment in the IEC61131-3 standard.

The code converter 50 is used to extract the corresponding program code from the neuron block code library and/or the programming element library according to the neuron block graphics and/or programming element graphics selected in the graphical AI model, and generate a complete coded program (i.e., the final AI source code) according to the connection and interface data between adjacent graphics in the selected neuron block graphics and/or programming element graphics.

In a specific implementation, the code converter 50 can scan the neuron block graphics and/or programming element graphics selected in the graphical AI model one by one from left to right and from top to bottom, extract the corresponding program code from the neuron block code library or the programming element library according to the name corresponding to the currently scanned graphic, and write the program code into the file cache; after the scanning is completed, generate a complete coded program according to the connection and interface data (for example, input and output data) between adjacent graphics in the selected neuron block graphics and programming element graphics, and write it into an AI program file with the AI file name.

In consideration of the situation where there are different AI frameworks in different programming languages, since a single neuron block or programming element may be implemented by a plurality of program code segments, therefore, in this case, the code converter 50 may extract the corresponding program code from the neuron block code library 10 and the programming element library 20 based on the neuron block graphics and/or programming element graphics selected in the graphical AI model and the target programming language and the target AI framework corresponding to a user-configured target system obtained.

Further, in order to be compatible with an existing AI coding program of the user, the code converter 50 may further receive the coded program of an AI model input by the user, parse the coded program line by line, obtain a keyword that can represent a neuron block or programming element, determine a corresponding neuron block or programming element according to the keyword, determine the connection between the corresponding neuron block graphic or programming element graphic and its interface data and an adjacent graphic according to the connection and interface data between adjacent neuron blocks and/or programming elements, generate a corresponding graphical AI model, and provide the graphical AI model to a graphical modeling interface 40 for display.

That is, the code converter 50 can perform not only conversion from graphical models to coded programs, but also reverse conversion from coded programs to graphical models.

The system supporting graphical programming based on neuron blocks in the embodiments of the present invention is described in detail above. The method supporting graphical programming based on neuron blocks in the embodiments of the present invention will be described below. The method supporting graphical programming based on neuron blocks in the embodiments of the present invention may be implemented by the system supporting graphical programming based on neuron blocks as shown in Figure 1, and the corresponding description in the system embodiments may be taken as reference for details not disclosed in the embodiments of the present invention, which will not be detailed here.

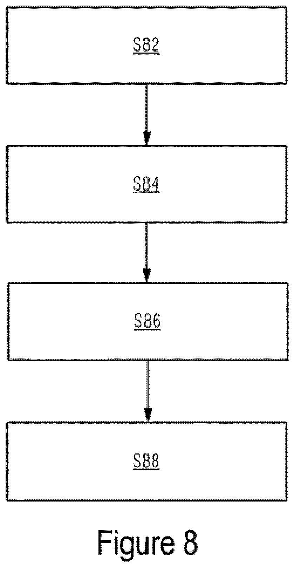

Figure 8 is an exemplary flowchart of the method supporting graphical programming based on neuron blocks in the embodiments of the present invention. As shown in Figure 8, the method may comprise the following steps:
Step S82, storing in advance the program code and the corresponding description file of each neuron block corresponding to each functional element in AI in a neuron block code library, and the program code and the corresponding description file of each programming element used to implement various decision logics and control logics in a programming element library. Specifically, the programming elements may include one or more of: a programming element for performing the IF logic, a programming element for performing the loop control logic, a programming element for performing the AND-OR control logic, and a programming element for performing the ENABLE and DISABLE control logic.

Step S84, when the system is started, extracting the description file of each neuron block from the neuron block code library, generating the corresponding neuron block graphic according to the description file of each neuron block, extracting the description file of each programming element from the programming element library, and generating the corresponding programming element graphic according to the description file of each programming element; wherein both the neuron block graphics and the programming element graphics conform to an industrial standard.

Step S86, presenting the neuron block graphics and the programming element graphics in a graphical modeling interface, and receiving the graphical AI model established by the appropriate neuron block graphics and/or programming element graphics selected by the user based on an industrial standard.

Step S88, extracting the corresponding program code from the neuron block code library and/or the programming element library according to the neuron block graphics and/or programming element graphics selected in the graphical AI model, and generating a complete coded program according to the connection and interface data between adjacent graphics in the selected neuron block graphics and/or programming element graphics.

In one implementation, the program code of each neuron block may comprise: for each neuron block, a plurality of program code segments corresponding to different programming languages and different AI frameworks; the program code of each programming element may comprise: for each programming element, a plurality of program code segments corresponding to different programming languages and different AI frameworks; accordingly, in Step S88, the corresponding program code may be extracted from the neuron block code library and/or the programming element library based on the neuron block graphics and/or programming element graphics selected in the graphical AI model and a target programming language and a target AI framework corresponding to a user-configured target system obtained.

Further, the above method may further comprise: receiving a coded program of an AI model input by the user; parsing the coded program line by line; obtaining a keyword that can represent a neuron block or programming element; determining a corresponding neuron block or programming element according to the keyword; determining the connection between the corresponding neuron block graphic or programming element graphic and its interface data and an adjacent graphic according to the connection and interface data between adjacent neuron blocks and/or programming elements, and generating a corresponding graphical AI model; and displaying the graphical AI model through the graphical modeling interface.

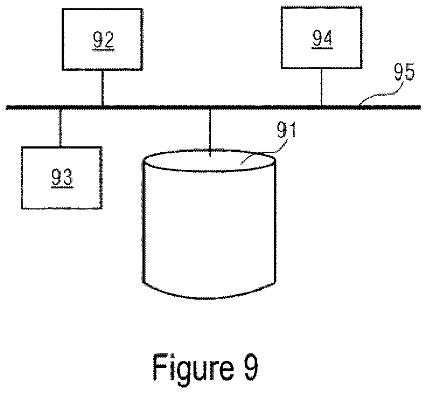

Figure 9 is an exemplary structural diagram of another system supporting graphical programming based on neuron blocks in the embodiments of the present invention. As shown in Figure 9, the system may comprise: at least one memory 91, at least one processor 92, at least one database 93 and at least one display 94. In addition, some other components, for example, communication ports, etc., may also be comprised. These components communicate via a bus 95.

Specifically, the at least one memory 91 is used to store a computer program. In one implementation, the computer program may be understood as comprising each of the modules of the system supporting graphical programming based on neuron blocks as shown in Figure 1. In addition, the at least one memory 91 may also store an operating system, etc. The operating system may be but is not limited to: an Android operating system, a Symbian operating system, a Windows operating system, a Linux operating system, etc.

The at least one database 93 is used to provide a neuron block code library and a programming element library; the neuron block code library is used to store program code and a corresponding description file of each neuron block corresponding to each functional element in AI; the programming element library is used to store program code and a corresponding description file of each programming element used to implement various decision logics and control logics.

The display 94 is used to provide a graphical modeling interface.

The at least one processor 92 is used to call the computer program stored in the at least one memory 91 to execute the method supporting graphical programming based on neuron blocks in the embodiments of the present invention. The processor 92 may be a CPU, a processing unit/module, an ASIC, a logic module, a programmable gate array, etc. It can receive and send data through the communication ports.

It should be noted that not all steps and modules in the above flowcharts and structural diagrams are necessary, and some steps or modules can be ignored based on actual needs. The sequence of execution of the steps is not fixed, and can be adjusted as needed. A functional division of the modules is used only to facilitate the description. In actual implementation, a module may be implemented by multiple modules, and the functions of multiple modules may be implemented by a single module. These modules may be located in a single device or in different devices.

It is understandable that the hardware modules in each embodiment above may be implemented mechanically or electronically. For example, a hardware module may comprise specially designed permanent circuits or logic devices (for example, dedicated processors, such as FPGA or ASIC) to complete specific operations. A hardware module may also comprise programmable logic devices or circuits temporarily configured by software (for example, general-purpose processors or other programmable processors) for performing specific operations. Whether to specifically use mechanical methods or dedicated permanent circuits or temporarily configured circuits (such as software configuration) to implement hardware modules may be determined according to cost and schedule considerations.

In addition, the embodiments of the present invention also provide a computer software that can be executed on a server or a server cluster or a cloud platform. The computer software can be executed by a processor and implement the method supporting graphical programming based on neuron blocks described in the embodiments of the present invention.

Moreover, a computer-readable storage medium is also provided in the embodiments of the present invention, which has a computer program stored thereon, which can be executed by a processor and implement the method supporting graphical programming based on neuron blocks in the embodiments of the present invention. Specifically, a system or device equipped with a storage medium may be provided, and the software program code for implementing the functions of any of the above implementations is stored on the storage medium, so that a computer (or CPU or MPU) of the system or device reads and executes the program code stored in the storage medium. In addition, the operating system operating on the computer may also be used to perform part or all of the actual operations through instructions based on the program code. It is also possible to write the program code read from the storage medium to the memory provided in an expansion board inserted into the computer or to the memory provided in an expansion unit connected to the computer, and then the program code-based instructions cause the CPU, etc. mounted on the expansion board or the expansion unit to perform part and all of the actual operations, so as to implement the functions of any of the above embodiments. Implementations of the storage media used to provide the program code include floppy disks, hard disks, magneto-optical disks, optical disks (such as CD-ROM, CD-R, CD-RW, DVD-ROM, DVD-RAM, DVD-RW, DVD+RW), magnetic tapes, nonvolatile memory cards and ROMs. Optionally, the program code may be downloaded from a server computer via a communication network.

The embodiments of the present invention are described mainly with the industrial standard IEC61131-3 as an example. In practical applications, other industrial standards may also be used as needed, as long as it is convenient for users in the industrial field to realize barrier-free AI programming.

Based on the system, device, or method supporting graphical programming based on neuron blocks in the embodiments of the present invention, a user may firstly configure the target system of a coded program, including the programming language, AI framework, etc. Then, the user may build a graphical AI model based on the neuron block graphics and the programming element graphics presented in the graphical modeling interface 40, and, after the graphical AI model is built, click on the code conversion key so that the system will complete the conversion of the graphical model to a coded program (i.e., source code). Then, the user may use powerful training resources such as PCs, clusters, clouds, etc. to train the AI model based on the completed coded AI program.

It can be seen from the above solution that, since in the embodiments of the present invention a neuron block is configured for each functional element in AI and each neuron block is implemented in three forms, i.e., program code, a description file and a graphical representation, in such a way that the graphical representation in particular conforms to a set industrial standard, for example, IEC61131-3, users are provided with a single programming mode for PLC development software in compliance with the IEC61131-3 standard, thereby enabling users in the industrial field who are accustomed to PLC, etc. to establish AI application models without difficulty, and then the system converts the code based on the model established to generate a coded program conforming to the operation environment of the target system, thus completing AI programming without any barrier.

In addition, by establishing program code in different programming languages and different AI frameworks for each neuron block, the final coded program can be converted to one that meets the requirements of the programming language and AI framework of the target system, thereby improving flexibility and versatility of programming.

Further, by converting an existing coded program of the user into a corresponding graphical module, compatibility with existing coded programs of the user can be realized.

The above are only the preferred embodiments of the present invention, and are not intended to limit the present invention. Any modification, equivalent replacement and improvement made without departing from the motivation and principle of the present invention shall be included in its scope.

## Claims

1. A system supporting graphical programming based on neuron blocks, **characterized in that** it comprises:
a neuron block code library (10), which stores program code and a corresponding description file of each neuron block corresponding to each functional element in an AI;
a programming element library (20), which stores program code and a corresponding description file of each programming element used to implement various decision logics and control logics;
a graphical management module (30), used to extract the description file of each neuron block from the neuron block code library, generate a corresponding neuron block graphic according to the description file of each neuron block, extract the description file of each programming element from the programming element library, and generate a corresponding programming element graphic according to the description file of each programming element; wherein both the neuron block graphics and the programming element graphics conform to a set industrial standard;
a graphical modeling interface (40), used to present the neuron block graphics and the programming element graphics generated by the graphical management module (30), and receive a graphical AI model established by the appropriate neuron block graphics and/or programming element graphics selected by the user based on the industrial standard; and
a code converter (50), used to extract the corresponding program code from the neuron block code library and/or the programming element library according to the neuron block graphics and/or programming element graphics selected in the graphical AI model, and generate a complete coded program according to a connection and interface data between adjacent graphics in the selected neuron block graphics and/or programming element graphics.

2. The system supporting graphical programming based on neuron blocks as claimed in claim 1, **characterized in that** the industrial standard is IEC61131-3.

3. The system supporting graphical programming based on neuron blocks as claimed in claim 1, **characterized in that**,
the program code of each neuron block comprises: for each neuron block, a plurality of program code segments corresponding to different programming languages and different AI frameworks;
the program code for each programming element comprises: for each programming element, a plurality of program code segments corresponding to different programming languages and different AI frameworks;
the code converter (50) extracts the corresponding program code from the neuron block code library and the programming element library based on the neuron block graphics and/or programming element graphics selected in the graphical AI model and a target programming language and a target AI framework corresponding to a user-configured target system obtained.

4. The system supporting graphical programming based on neuron blocks as claimed in claim 3, **characterized in that** the different programming languages and different AI frameworks include: the TensorFlow framework and the PyTorch framework in Python, and the Caffe framework in C++.

5. The system supporting graphical programming based on neuron blocks as claimed in claim 1, **characterized in that** the neuron blocks comprise one or more of: a two-dimensional convolution function block, a two-dimensional max pooling block, a two-dimension to one-dimension flattening block, and a many-to-few integration and conversion block.

6. The system supporting graphical programming based on neuron blocks as claimed in claim 1, **characterized in that** the programming elements include one or more of: a programming element for performing the IF logic, a programming element for performing the loop control logic, a programming element for performing the AND-OR control logic, and a programming element for performing the ENABLE and DISABLE control logic.

7. The system supporting graphical programming based on neuron blocks as claimed in claim 1, **characterized in that** the data types used in the program code of each neuron block include:
basic data types conforming to the industrial standard; and
additional data types of a corresponding AI framework, including TUPLE, TENSOR and NONE.

8. The system supporting graphical programming based on neuron blocks as claimed in any of claims 1 to 7, **characterized in that** the code converter (50) is further used to receive a coded program of an AI model input by the user, parse the coded program line by line, obtain a keyword that can represent a neuron block or programming element, determine a corresponding neuron block or programming element according to the keyword, determine the connection between the corresponding neuron block graphic or programming element graphic and its interface data and an adjacent graphic according to the connection and interface data between adjacent neuron blocks and/or programming elements, generate a corresponding graphical AI model, and provide the graphical AI model to a graphical modeling interface (40) for display.

9. A method supporting graphical programming based on neuron blocks, **characterized in that** it comprises:
storing in advance the program code and the corresponding description file of each neuron block corresponding to each functional element in AI in a neuron block code library, and the program code and the corresponding description file of each programming element used to implement various decision logics and control logics in a programming element library (S82);
when the system is started, extracting the description file of each neuron block from the neuron block code library, generating the corresponding neuron block graphic according to the description file of each neuron block, extracting the description file of each programming element from the programming element library, and generating the corresponding programming element graphic according to the description file of each programming element (S84); wherein both the neuron block graphics and the programming element graphics conform to a set industrial standard;
presenting the neuron block graphics and the programming element graphics in a graphical modeling interface, and receiving a graphical AI model established by the appropriate neuron block graphics and/or programming element graphics selected by the user based on the industrial standard (S86); and
extracting the corresponding program code from the neuron block code library and/or the programming element library according to the neuron block graphics and/or programming element graphics selected in the graphical AI model, and generating a complete coded program according to a connection and interface data between adjacent graphics in the selected neuron block graphics and/or programming element graphics (S88).

10. The method supporting graphical programming based on neuron blocks as claimed in claim 9, **characterized in that**,
the program code of each neuron block comprises: for each neuron block, a plurality of program code segments corresponding to different programming languages and different AI frameworks;
the program code for each programming element comprises: for each programming element, a plurality of program code segments corresponding to different programming languages and different AI frameworks;
extracting the corresponding program code from the neuron block code library and/or the programming element library according to the neuron block graphics and/or programming element graphics selected in the graphical AI model is: extracting the corresponding program code from the neuron block code library and/or the programming element library based on the neuron block graphics and/or programming element graphics selected in the graphical AI model and a target programming language and a target AI framework corresponding to a user-configured target system obtained.

11. The method supporting graphical programming based on neuron blocks as claimed in claim 9, **characterized in that** the programming elements include one or more of: a programming element for performing the IF logic, a programming element for performing the loop control logic, a programming element for performing the AND-OR control logic, and a programming element for performing the ENABLE and DISABLE control logic.

12. The method supporting graphical programming based on neuron blocks as claimed in claim 9, **characterized in that** the data types used in the program code of each neuron block include:
basic data types conforming to the industrial standard; and
additional data types of a corresponding AI framework, including TUPLE, TENSOR and NONE.

13. The method supporting graphical programming based on neuron blocks as claimed in any of claims 9 to 12, **characterized in that** it further comprises:
receiving a coded program of an AI model input by the user;
parsing the coded program line by line;
obtaining a keyword that can represent a neuron block or programming element;
determining a corresponding neuron block or programming element according to the keyword;
determining a connection between the corresponding neuron block graphic or programming element graphic and its interface data and an adjacent graphic according to the connection and interface data between adjacent neuron blocks and/or programming elements, and generating a corresponding graphical AI model; and
displaying the graphical AI model through the graphical modeling interface.

14. A system supporting graphical programming based on neuron blocks, **characterized in that** it comprises: at least one memory (91), at least one processor (92), at least one database (93) and at least one display (94), wherein:
the at least one memory (91) is used to store a computer program; and
the at least one database (93) is used to provide a neuron block code library and a programming element library; the neuron block code library is used to store program code and a corresponding description file of each neuron block corresponding to each functional element in AI; the programming element library is used to store program code and a corresponding description file of each programming element used to implement various decision logics and control logics;
the display (94) is used to provide a graphical modeling interface; and
the at least one processor (92) is used to call the computer program stored in the at least one memory (91) to execute the method supporting graphical programming based on neuron blocks as claimed in any of claims 9 to 13.

15. A computer-readable storage medium, which has a computer program stored thereon; and is **characterized in that** the computer program can be executed by a processor and implement the method supporting graphical programming based on neuron blocks as claimed in any of claims 9 to 13.
